# EUROPEAN PATENT APPLICATION

(11) **EP 1 928 148 A1**
(43) Date of publication of application: **04.06.2008**
(21) Application number: 07121500.8
(22) Date of filing: 26.11.2007
(51) Int. Cl.: H04L 29/06, H04N 7/24

(54) **Apparatus and method for linking basic device and extended devices**

(30) Priority: 28.11.2006 KR 20060118549
(71) Applicant: SAMSUNG ELECTRONICS CO., LTD., Suwon-City, Kyungki-do (KR)
(72) Inventor: Kim, Jong-hwa, Gyeonggi-do (KR)
(74) Representative: Walaski, Jan Filip

(57) **Abstract**

A basic device used in a linking of the basic device and an extended device includes an extended scene description manager parsing an extended scene descriptor, and a meta data delivery manager extracting meta data from a multimedia stream using the result of parsing and transmitting the extracted meta data to the extended device.

## Description

Methods and apparatuses consistent with the present invention relate to linkage of devices, and more particularly, to linking a basic device and extended devices using meta data included in multimedia streams.

A related art multimedia reproduction apparatus, for example, a television (TV), merely stimulates the eyes and ears of users since it reproduces only images and voices. However, users can expect new forms of multimedia services which satisfy other senses such as smell, touch, and taste in addition to the eyes and ears of the user. Also, in the future, embedded and divergent visual and audio streams including a plurality of multimedia content can be provided. That is, a plurality of multimedia reproduction apparatuses can simultaneously provide different video and audio content using a single multimedia stream. Furthermore, the digital multimedia stream is used to link a multimedia reproduction apparatus and various electronic devices so that three dimensional (3D) multimedia reproduction satisfying the five senses of a user may be possible.

The present invention provides an apparatus and method for linking a basic device and extended devices to provide a multiform rich media service which can satisfy the five senses of a user.

According to an aspect of the present invention, there is provided a method of linking a basic device and an extended device, the basic device comprises an extended scene description manager parsing an extended scene descriptor, and a meta data delivery manager extracting meta data from multimedia stream using the result of parsing, and transmitting the extracted meta data to the extended device.

The basic device further comprises a scene descriptor parser parsing a basic scene descriptor and a scene composition manager composing motion pictures.
The meta data is data about the type of extended device to be linked and the content of a linking operation.

The multimedia stream includes audio stream, video stream, and data stream.
The basic device is a multimedia reproduction apparatus, and the multimedia reproduction apparatus is a digital TV.

According to another aspect of the present invention, there is provided an extended device which comprises a meta data receiving portion receiving meta data from a basic device, a meta data interpretation portion interpreting the received meta data, and a control portion performing a linking operation using the result of interpretation of the meta data.

The extended device includes at least one of an air and humidity control apparatus, a temperature control apparatus, a multimedia display device, an audio output apparatus, an illumination apparatus, etc.

The meta data is data about the type of extended device to be linked and the content of the linking operation.

According to another aspect of the present invention, there is provided a multiform rich media system which comprises a basic device reproducing a motion picture using multimedia streams or extracting meta data from the multimedia stream, an extended device performing a linking operation using the meta data, and an interconnection layer transmitting the meta data to the extended device.

The interconnection layer is any one of 1394-over-IP, power line communication (PLC), universal serial bus (USB), wireless internet protocol (IP), and ultra wide band (UWB).

According to another aspect of the present invention, there is provided a method for linking an extended device and a basic device, comprising parsing an extended scene descriptor, extracting meta data from multimedia streams using the result of parsing, transmitting the extracted meta data to the extended device, and performing a linking operation of the extended device.

The meta data is data about the type of extended device to be linked and the content of the linking operation.

The extended scene descriptor includes an object descriptor identifier (ID) needed for extraction of the meta data.

The method further comprises determining whether there is a request from a user to link the basic device with the extended device.

The extended apparatus is an air and temperature control apparatus and the linking operation is a control operation, which controls at least one of strength, direction, and temperature of air flow.

The extended device is an illumination apparatus and the linking operation is a control of at least one of brightness and color of a ramp.

The performing of the linking operation of the extended device comprises receiving the meta data from the basic device, determining a content of the linking operation of the extended device by interpreting the meta data, and performing the linking operation according to the content of the determined linking operation.

The linking operation of the extended device is synchronized with the operation of the basic device.

The operation of the basic device is reproduction of a motion picture and the linking operation of the extended device is reproduction of a different motion picture or audio related to a scene of the motion picture.
According to another aspect of the present invention, there is provided a storage medium which stores a stream including a scene descriptor, wherein the scene descriptor comprises a general scene descriptor, and an extended scene descriptor including an ID of an object descriptor related to meta data.

The storage medium further stores the meta data including data about type of an extended device performing a linking operation and a content of the linking operation.

According to another aspect of the present invention, there is provided a storage medium which stores a computer program to execute operations on a computer in linking a basic device and an extended device, wherein the operations comprise parsing an extended scene descriptor, extracting meta data from multimedia streams using the result of parsing, transmitting the extracted meta data to the extended device, and performing a linking operation of the extended device.

According to another aspect of the present invention, there is provided a storage medium which stores a computer program to execute operations on a computer, wherein the operations comprise receiving meta data from a basic device, determining a content of a linking operation of an extended device by interpreting the meta data, and performing the linking operation according to the content of the determined linking operation.

The above and other aspects of the present invention will become more apparent by describing in detail exemplary embodiments thereof with reference to the attached drawings in which:
FIG. 1 illustrates a scenario about the linkage of a basic device and extended devices according to an exemplary embodiment of the present invention;
FIG. 2 is a tree graph of a scene descriptor (SD) according to an exemplary embodiment of the present invention;
FIG. 3 is a block diagram of a linking system to link a basic device and extended devices according to an exemplary embodiment of the present invention;
FIG. 4 is a flowchart illustrating a linking method for a basic device (TV) and an extended device (PMP) according to an exemplary embodiment of the present invention;
FIG. 5 is a flowchart illustrating a detailed content of the linking of the extended device of FIG. 4; and
FIGS. 6A through 6F illustrate a method for linking a basic device and extended devices according to another exemplary embodiment of the present invention.

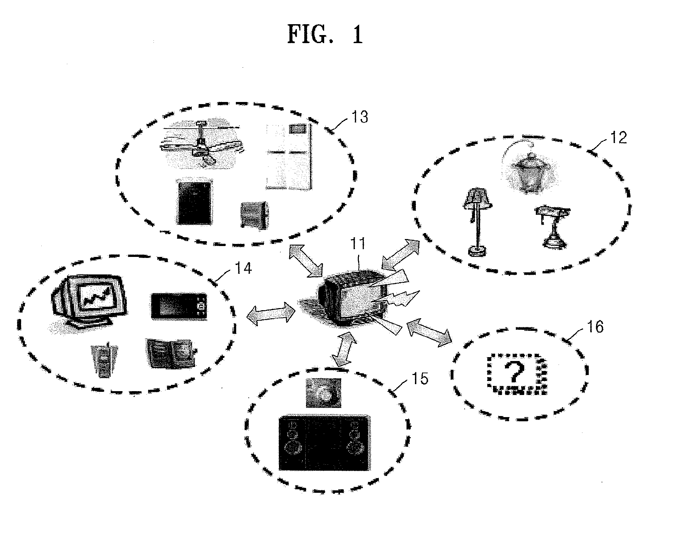

FIG. 1 illustrates a scenario depicting the linkage of a basic device and extended devices according to an exemplary embodiment of the present invention. Referring to FIG. 1, a multiform rich media service system according to an exemplary embodiment of the present invention includes a basic device 11 and extended devices 12 through 16. In the present exemplary embodiment, the basic device 11 may be a digital TV, but is not limited thereto, and the extended devices 12 through 16 are categorized into an illumination apparatus 12, an air and temperature control apparatus 13, a video reproduction apparatus 14, an audio reproduction apparatus 15, and other apparatuses 16, such as a vibration apparatus, a fragrance control apparatus, and a position control apparatus, but are not limited thereto.

Assuming that a viewer watches a movie through the digital TV 11, when the background of a scene of the movie is night, the brightness or color of the illumination apparatus 12 in the room is controlled to be dark in synchronisation with the movie scene on the TV so that the viewer can enjoy the movie more realistically. Also, if the viewer watches a sports event, the audio reproduction apparatus 15 simultaneously reproduces sound from stands in synchronisation with the sport scene so that the viewer can feel the sense of presence as if he or she were sitting in the stands.

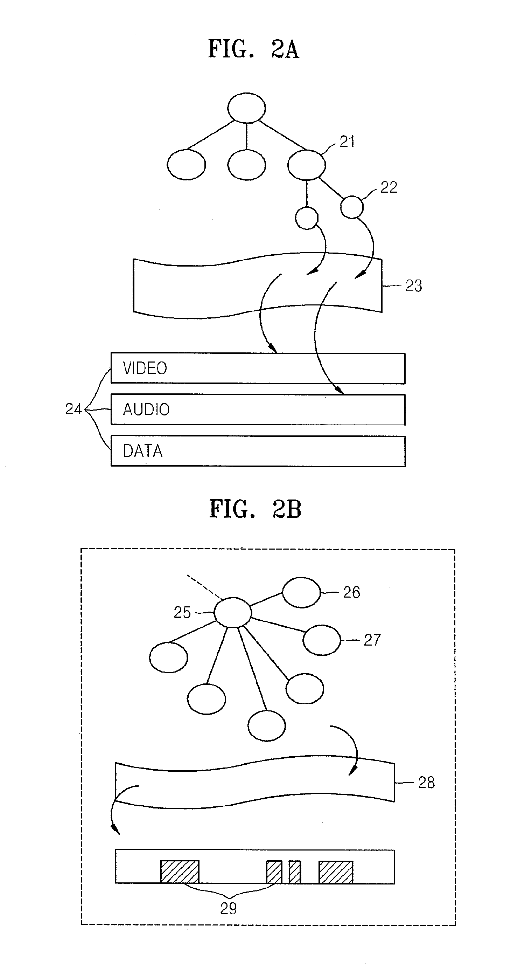

FIG. 2 is a tree graph of a scene descriptor (SD) according to an exemplary embodiment of the present invention. The SD is classified into a basic SD and an extended SD. In the present exemplary embodiment, an SD according to MPEG-4 standard, an international standard for multimedia data coding, can be employed as the basic SD. The SD according to the present exemplary embodiment can be written in a language such as BIFS, LASeR, or MORE.

The basic SD has a tree structure composed of a plurality of nodes and describes the presentation of an audio or video object and characteristics of an audio or video object. A second rank node 21 of the tree structure indicates contents to be synthesized which may be, for example, movie, sports, news, or drama. A third rank node 22 corresponds to an ID of an object (object descriptor ID or OD_ID) about audio, video, and data. The object ID can be obtained from the OD_ID and a necessary object is extracted from a broadcast stream 24 using the object ID.

The extended SD provides information needed to link the extended device to the basic device. The extended SD is added to the basic SD to form an SD. Second rank nodes 26 and 27 include the OD_ID corresponding to meta data related to a particular scene and each node 26 or 27 relates to a different extending device. For example, the node 26 has an OD_ID corresponding to the meta data of the illumination apparatus while the node 27 has an OD_ID corresponding to the meta data of the air and temperature control apparatus. The ID of the meta data can be obtained from an object descriptor 28. Meta data 29 is extracted from broadcast streams using the ID of the meta data. The meta data includes information on the type of extended device, the content of a linking operation, and the time for performing the linking operation.

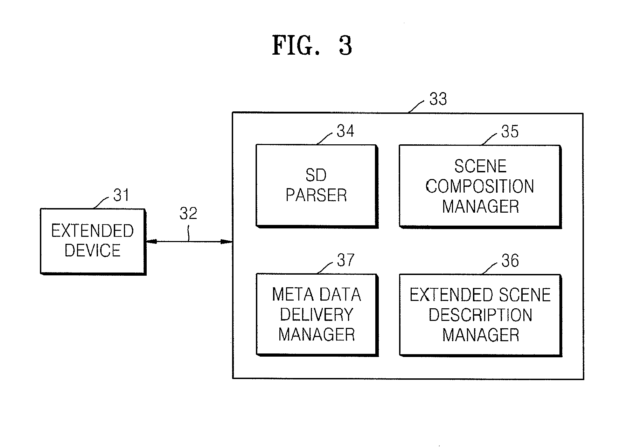

FIG. 3 is a functional block diagram of a linking system to link the basic device and the extended devices according to an exemplary embodiment of the present invention. The system includes a basic device 33, for example, a digital TV, an extended device 31, and an interconnection layer 32 electrically interconnecting the basic device 33 and the extended device 31.

The basic device 33, for example, a digital TV, includes elements (not shown) to perform innate functions such as receiving and decoding broadcast signals, and outputting video and audio to viewers. Additionally, for linking with the extended device, the basic device 33 further includes an SD parser 34, a scene composition manager 35, an extended SD manager 36, and a meta data delivery manager 37.

The SD parser 34 parses an SD. The digital TV that is the basic device 33, receives broadcast streams through a wired or wireless channel. The broadcast streams or multimedia streams includes an SD stream. The SD parser 34 parses only a basic SD that forms the SD.

The scene composition manager 35 includes a decoder, a buffer, and a compositor. The scene composition manager 35 composes motion pictures using the result of parsing obtained from the SD parser 34 and audio stream, video stream, and data stream including still images and control signals. Also, the scene composition manager 35 manages the overall operation of the system including control of the linking of the basic device with the extended devices.

The extended SD manager 36 parses an extended SD included in the SD and obtains an object descriptor ID or OD ID corresponding to the meta data related to a particular scene.

The meta data delivery manager 37 extracts the corresponding meta data from the broadcast stream using the OD_ID obtained by the extended SD manager 36.
Then, the meta data delivery manager 37 delivers the extracted meta data to the extended device.

The extended device 31 can be categorized into an air and humidity control apparatus, a temperature control apparatus, a multimedia display device, an audio output apparatus, an illumination apparatus, a vibration apparatus, a fragrance control apparatus, and a position control apparatus. At least one or more is electrically connected to the basic apparatus and operated in the linking or connection process.

Each extended device 31 additionally includes a meta data receiving portion, a meta data interpretation portion, a sensor, and a control portion which are not shown in the drawings. The meta data receiving portion receives the meta data from the basic apparatus 33. The meta data interpretation portion interprets the received meta data. The control portion performs a linking operation of the basic device and the extended device 31 according to the result of interpretation.

The interconnection layer 32 includes 1394-over-IP, power line communication (PLC), universal serial bus (USB), wireless internet protocol (IP), and ultra wide band (UWB).

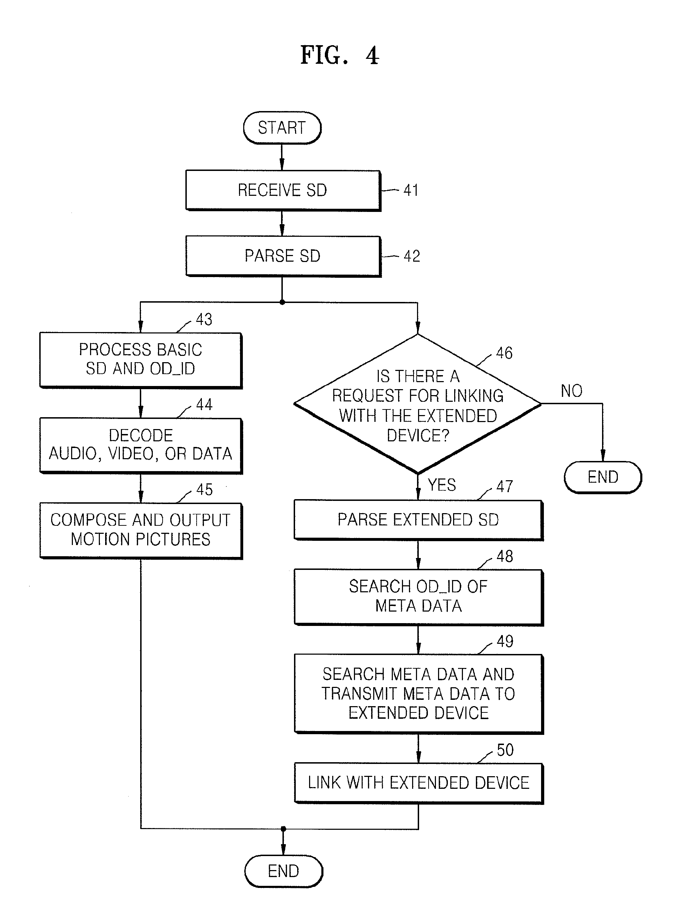

FIG. 4 is a flowchart illustrating a linking method for a basic device, for example a TV and an extended device (consumer electronics) according to the exemplary embodiment of the present invention. Referring to FIG. 4, in operation 41, the SD parser 34 receives an SD. The SD is obtained from the SD stream obtained by demultiplexing the broadcast stream.

In operation 42, only a portion corresponding to the basic SD of the SD is parsed. In this operation, an audio, video, or image object forming a scene, an object presentation method, and an object characteristic are interpreted.

In operation 43, the basic SD and the OD_ID are processed. In this operation, objects are extracted based on the result of interpretation in operation 42, which are necessary to compose motion pictures.

In operation 44, the data included in the multimedia stream is decoded. Since the audio stream, video stream, and data stream received by the basic device 33 are in a compressed state, these streams are decompressed and decoded.

In operation 45, the motion pictures are composed and output. The multimedia data decoded in the operation 44 are composed based on the result of interpretation obtained from the operation 43 and output through a display or speaker of the basic device 33.

In operation 46, it is determined whether there is a request for linking the basic device to an extended device 31. When there is no request for linking to the extended device 31 from a user according to the result of determination, the procedure is terminated. If there is a request for linking the basic device to the extended device 31 from a user, the SD parser 34 parses an extended SD in operation 47.

In operation 48, the ID of an object descriptor, that is, the OD_ID, is searched for. In this operation, the OD_ID of the meta data related to a scene to be linked is searched for.

In operation 49, the meta data is searched for and transmitted to the extended device 31. The meta data is extracted from the broadcast stream using the OD_ID detected in operation 48 and then the extracted meta data is transmitted to the extended devices 31 connected to the basic device 33.

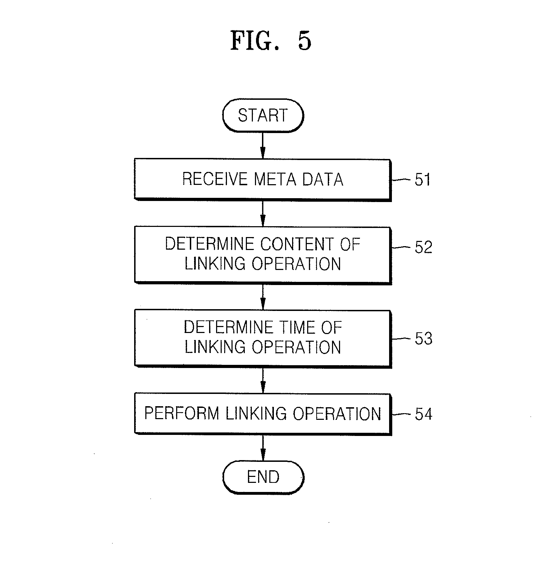

In operation 50, the extended device 31 performs an operation for linking the extended device 31 to the basic device 33. The operation will be described in detail with reference to FIG. 5.

FIG. 5 is a flowchart illustrating a detailed content of a linking operation of the extended device of FIG. 4. Referring to FIG. 5, in operation 51, meta data is received. The extended device 31 receives the meta data through the link layer 32 from the basic device 31.

In operation 52, the extended device 31 interprets the received meta data to determine the content of the linking operation, for example, whether to perform the linking operation and the type of linking operation. That is, it is determined whether the extended device to perform the linking operation is an illumination apparatus or an air and temperature control apparatus. If the air and temperature control apparatus needs to perform the linking operation, the strength, direction, or temperature of air flow is determined.

In operation 53, the extended device 31 interprets the received meta data to determine the time to perform a linking operation. Also, the extended device 31 determines whether the linking operation of the extended device 31 is synchronized with the operation of the basic device 33.

In operation 54, the linking operation of the extended device 31 is performed according to the content determined in the operations 52 and 53. The linking operation of the extended device 31 can be synchronized with the operation of the basic device 33.

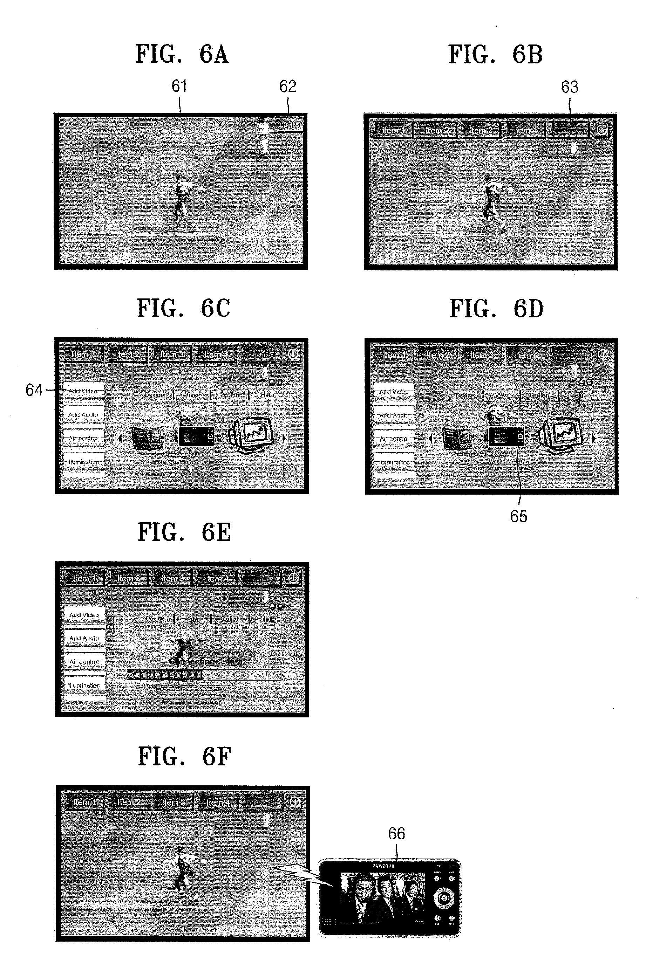

FIGS. 6A through 6F illustrate a method for linking a basic device and extended devices according to another exemplary embodiment of the present invention. In the present embodiment, a digital TV is used as a basic device while a personal media player (PMP) is used as an extended device.

A user watches a soccer game through a screen 61 of a TV. When the user selects a "start" button 62 at the upper right corner of the screen 61 (FIG. 6A), buttons or icons indicating various additional functions of the TV are displayed on the screen 61 of the TV.

When the user presses a "connect" button 63, a process for linking with the extended device starts (FIG. 6B). First, buttons indicating categories of the extended devices that can be linked with the TV are displayed on the left side of the screen 61 (FIG. 6C).

When the user selects a video reproduction apparatus (Add Video) 64 of the displayed buttons, icons indicating examples of the video reproduction apparatus are displayed at the center of the screen 61 of the TV (FIG. 6C). When the user selects the icon in the middle of the displayed examples to select a PMP 65 (FIG. 6D), the linking operations, that is, the operations 47 through 50 of FIG. 4, between the TV and PMP starts (FIG. 6E). The PMP 66 linked with the TV that broadcasts the soccer game displays a scene of commentators who commentate on the game (FIG. 6F).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

While this invention has been particularly shown and described with reference to exemplary embodiments thereof, it will be understood by those skilled in the art that various changes in form and details may be made therein without departing from the scope of the invention as defined by the appended claims.

As described above, the multiform rich media service according to the exemplary embodiments of the present invention can satisfy the five senses of a user by linking the basic device with various extended devices using the meta data included in multimedia stream.

## Claims

1. A basic device for linking with an extended device, the basic device comprising:
an extended scene description manager for parsing an extended scene descriptor; and
a meta data delivery manager for extracting meta data from a multimedia stream using a result of the parsing of the extended scene descriptor, and for transmitting the extracted meta data to the extended device.

2. The basic device of claim 1, further comprising a scene descriptor parser which parses a basic scene descriptor and a scene composition manager which composes motion pictures.

3. The basic device of claim 1 or 2, wherein the meta data comprises information on a type of the extended device to be linked and a content of a linking operation.

4. The basic device of any one of the preceding claims, wherein the multimedia stream includes an audio stream, a video stream, and a data stream.

5. The basic device of any one of the preceding claims, wherein the basic device is a multimedia reproduction apparatus.

6. The basic device of claim 5, wherein the multimedia reproduction apparatus is a digital television.

7. An extended device for linking with a basic device, the extended device comprising:
a meta data receiving portion for receiving meta data from a basic device;
a meta data interpretation portion for interpreting the received meta data; and
a control portion for performing a linking operation using a result of the interpretation of the meta data.

8. The extended device of claim 7, wherein the extended device includes at least one of an air and humidity control apparatus, a temperature control apparatus, a multimedia display device, an audio output apparatus, and an illumination apparatus.

9. The extended device of claim 7 or 8, wherein the meta data comprises information on a type of the extended device to be linked and a content of the linking operation.

10. A multiform rich media system comprising:
a basic device which reproduces a motion picture using a multimedia stream and extracts meta data from the multimedia stream;
an extended device which performs a linking operation using the meta data; and
an interconnection layer which transmits the meta data to the extended device.

11. The multiform rich media system of claim 10, wherein the interconnection layer is any one of 1394-over-IP, power line communication, universal serial bus, wireless internet protocol, and ultra wide band.

12. The multiform rich media system of claim 10 or 11, wherein the meta data includes information on a type of the extended device and a content of the linking operation.

13. A method of linking an extended device and a basic device, the method comprising:
parsing an extended scene descriptor;
extracting meta data from a multimedia stream using a result of the parsing of the extended scene descriptor;
transmitting the extracted meta data to the extended device; and
performing a linking operation of the extended device with the basic device using the meta data.

14. The method of claim 13, wherein the meta data comprises information on a type of the extended device to be linked and a content of the linking operation.

15. The method of claim 13 or 14, wherein the extended scene descriptor includes an object descriptor ID needed for the extraction of the meta data.

16. The method of claim 13, 14 or 15, further comprising determining whether there is a request from a user to link the basic device with the extended deice.

17. The method of any one of claims 13 to 16, wherein the extended apparatus is an air and temperature control apparatus and the linking operation is a control of at least one of a strength, a direction, and a temperature of air flow.

18. The method of any one of claims 13 to 16, wherein the extended device is an illumination apparatus and the linking operation is a control of at least one of a brightness and a color of a lamp.

19. The method of any one of claims 13 to 18, wherein the performing of the linking operation of the extended device comprises:
receiving the extracted meta data from the basic device;
determining a content of the linking operation of the extended device by interpreting the extracted meta data; and
performing the linking operation according to the content of the determined linking operation.

20. The method of any one of claims 13 to 19, wherein the linking operation of the extended device is synchronized with an operation of the basic device.

21. The method of claim 20, wherein the operation of the basic device is a reproduction of a motion picture and the linking operation of the extended device is a reproduction of a different motion picture or an audio related to a scene of the motion picture.

22. A computer readable recording medium having embodied thereon a computer program for linking a basic device with an extended device, and for storing a stream including a scene descriptor, wherein the scene descriptor comprises:
a general scene descriptor; and
an extended scene descriptor including an identifier of an object descriptor related to meta data.

23. The recording medium of claim 22, further storing the meta data which comprises information on a type of an extended device which performs a linking operation and a content of the linking operation.

24. A computer program which, when executed by a processor, is arranged to perform the method of any one of claims 13 to 21.
